# EUROPEAN PATENT SPECIFICATION

(11) **EP 3 988 179 B1**
(45) Date of publication and mention of the grant of the patent: **17.09.2025**
(21) Application number: 21764423.6
(22) Date of filing: 04.03.2021
(51) Int. Cl.: A62C 3/16, H01M 50/24, H01M 50/20, H01M 10/613, H01M 50/204, H01M 10/42, A62C 37/14

(54) **BATTERY MODULE, BATTERY RACK COMPRISING SAME BATTERY MODULE, AND POWER STORAGE DEVICE COMPRISING SAME BATTERY RACK**
BATTERIEMODUL, BATTERIEGESTELL MIT DEM BATTERIEMODUL UND ENERGIESPEICHERVORRICHTUNG MIT DEM BATTERIEGESTELL
MODULE DE BATTERIE, BÂTI DE BATTERIE COMPRENANT UN MODULE DE BATTERIE, ET DISPOSITIF DE STOCKAGE D'ÉNERGIE COMPRENANT UN BÂTI DE BATTERIE

(30) Priority: 04.03.2020 KR 20200027369
(43) Date of publication of application: 27.04.2022
(73) Proprietor: LG Energy Solution, Ltd., Seoul 07335 (KR)
(72) Inventor: JO, Sang-Hyun, Daejeon 34122 (KR); LEE, Young-Seok, Daejeon 34122 (KR); BAE, Kyung-Hyun, Daejeon 34122 (KR); SHIN, Jin-Kyu, Daejeon 34122 (KR); LEE, Jin-Kyu, Daejeon 34122 (KR)
(74) Representative: Plasseraud IP
(86) International application number: PCT/KR2021/002705
(87) International publication number: WO 2021/177757

(56) References cited:
- CN-A- 110 227 224
- CN-A- 110 496 335
- JP-A- 2014 090 782
- JP-A- H0 531 206
- KR-B1- 101 506 575
- KR-B1- 101 779 187
- US-A1- 2014 170 447
- US-A1- 2017 043 194

## Description

### TECHNICAL FIELD

The present disclosure relates to a battery module, a battery rack including the battery module, and an energy storage system including the battery rack.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack or a battery rack by using at least one battery module and adding other components. The battery pack is generally provided as an energy source of an electric vehicle or the like, and recently, an energy storage system including a plurality of battery racks is attracting attention as an energy source for home or industrial use.

However, the conventional battery pack or battery rack includes a plurality of battery modules, and if thermal runaway occurs in the battery cells of each battery module to cause ignition or explosion, heat or flame is transferred to neighboring battery cells, which may result in secondary explosion or the like. Thus, efforts are being made to more rapidly prevent secondary ignition or explosion.

Therefore, there is a need to find a way for providing a battery module capable of more rapidly extinguishing thermal runaway or fire at an early stage when thermal runaway occurs in the battery module or fire occurs due to the thermal runaway or the like, a battery rack including the battery module, and an energy storage system including the battery rack.

Further prior art is disclosed in CN 110 227 224 A, US 2017/043194 A1 and CN 110 496 335 A.

### Technical Problem

The present disclosure is designed to solve the problems of the related art, and therefore the present disclosure is directed to providing a battery module capable of more rapidly extinguishing thermal runaway or fire at an early stage when thermal runaway occurs in the battery module or fire occurs due to the thermal runaway or the like, a battery rack including the battery module, and an energy storage system including the battery rack.

This object is accomplished with a battery module comprising the features of patent claim 1.

The invention is defined in claim 1. Dependent claims are directed on features of preferred embodiments of the present invention.

### Advantageous Effects

According to various embodiments it is possible to provide a battery module capable of more rapidly extinguishing thermal runaway or fire at an early stage when thermal runaway occurs in the battery module or fire occurs due to the thermal runaway or the like, a battery rack including the battery module, and an energy storage system including the battery rack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is a partial exploded view showing the battery module of FIG. 1.
FIG. 3 is a diagram for illustrating a fire extinguishing unit, provided to the battery module of FIG. 2.
FIG. 4 is a diagram for illustrating an injection nozzle, provided to the fire extinguishing unit of FIG. 3.
FIG. 5 is a diagram for illustrating an injection nozzle according to another embodiment of the fire extinguishing unit of FIG. 3.
FIG. 6 is a sectional view showing the battery module of FIG. 1.
FIGS. 7 to 10 are diagrams for illustrating a fire extinguishing agent injection mechanism inside a module case when fire or thermal runaway occurs in the battery module of FIG. 1.
FIG. 11 is a diagram for illustrating a battery rack according to another embodiment of the present disclosure.
FIG. 12 is a diagram for illustrating an energy storage system according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways without departing from the scope of the invention defined in the appended claims.

In addition, for ease understanding of the present disclosure, the accompanying drawings are not drawn to real scale, but the dimensions of some components may be exaggerated.

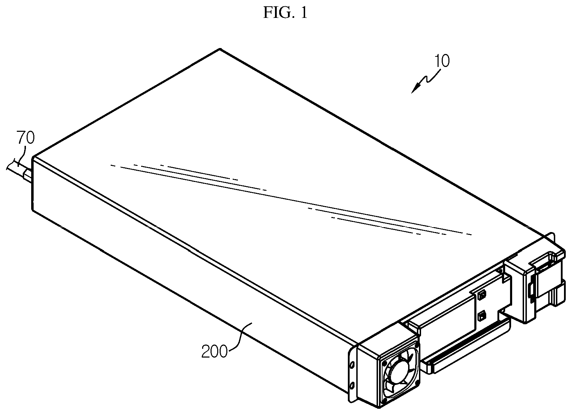

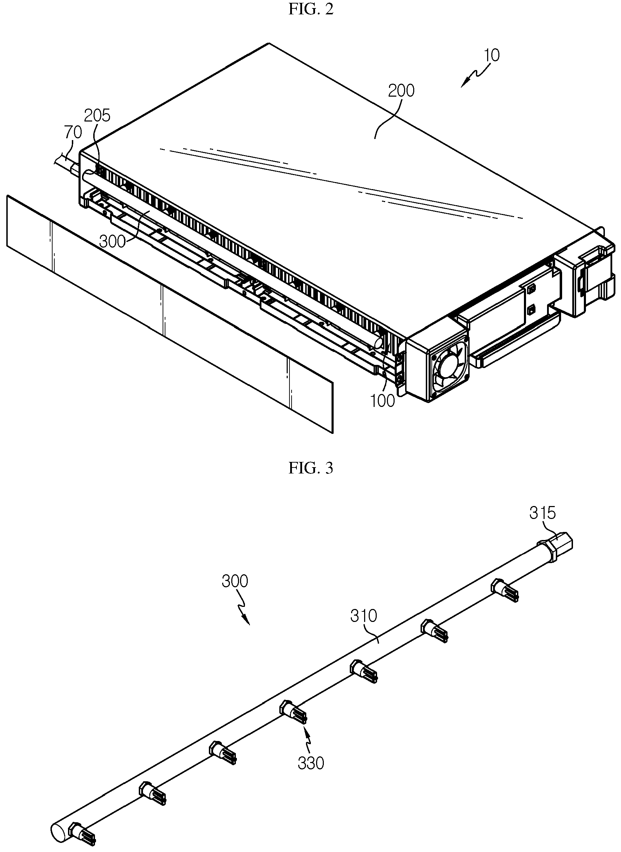

FIG. 1 is a diagram for illustrating a battery module according to an embodiment of the present disclosure, and FIG. 2 is a partial exploded view showing the battery module of FIG. 1.

Referring to FIGS. 1 and 2, a battery module 10 includes at least a battery cell 100, a module case 200 and a fire extinguishing unit 300.

The battery cell 100 is a secondary battery, and may be provided as a pouch-type secondary battery, a rectangular secondary battery, or a cylindrical secondary battery. Hereinafter, in this embodiment, it will be described that the battery cell 100 is a pouch-type secondary battery.

At least one battery cell 100 or a plurality of battery cells 100 may be provided. Hereinafter, in this embodiment, it will be described that the battery cell 100 is provided in plural.

The module case 200 accommodates the plurality of battery cells 100. To this end, an accommodation space for accommodating the plurality of battery cells 100 is provided in the module case 200.

The module case 200 has a connection hole 205.

The connection hole 205 is formed at a rear side of the module case 200, and is provided as an opening of a predetermined size. The fire extinguishing unit 300, explained later, passes through the connection hole 205.

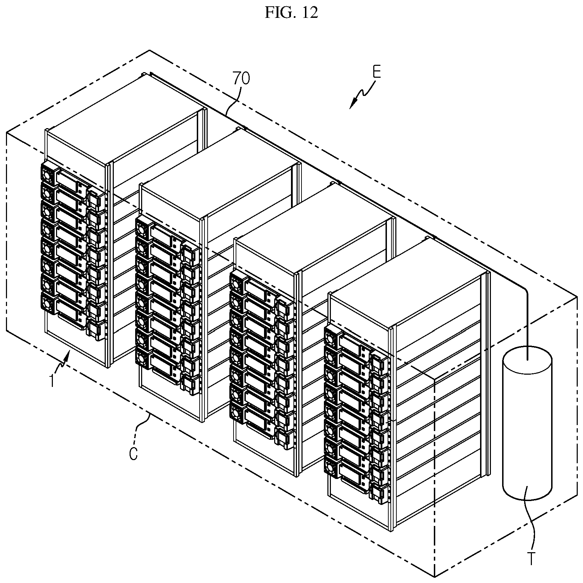

The fire extinguishing unit 300 is mounted to penetrate into the module case 200 and is connected to a fire extinguishing tank unit T (see FIG. 12) containing a fire extinguishing agent to directly inject the fire extinguishing agent into the module case 200 when a thermal runaway occurs at the plurality of battery cells 100 or a fire occurs due to the thermal runaway or the like. Here, the fire extinguishing agent may be provided as water.

The fire extinguishing unit 300 is connected to the fire extinguishing tank unit T via a fire extinguishing agent supply pipe 70. The fire extinguishing unit 300 is disposed to penetrate into the module case 200 at one side end of the module case 200 to be elongated in a longitudinal direction of the module case 200.

Specifically, the fire extinguishing unit 300 is mounted to penetrate into the module case 200 through the connection hole 205 of the module case 200 at one side of a rear surface of the module case 200, and is communicatively connected to the fire extinguishing agent supply pipe 70.

In the case of this embodiment, when fire occurs at the battery cells 100 inside the battery module 10, since the fire extinguishing unit 300 directly injects the fire extinguishing agent into the module case 200, it is possible to more quickly and effectively extinguish the fire at an early stage.

Hereinafter, the fire extinguishing unit 300 according to this embodiment will be described in more detail.

FIG. 3 is a diagram for illustrating a fire extinguishing unit, provided to the battery module of FIG. 2.

Referring to FIG. 3, the fire extinguishing unit 300 includes a unit body 310 and an injection nozzle 330.

The unit body 310 is provided in an approximately elongated pipe shape in a predetermined length. The unit body 310 has an internal flow path formed therein for storage and movement of the fire extinguishing agent, and is connected to the fire extinguishing tank unit T (see FIG. 12), explained later, through the fire extinguishing agent supply pipe 70. Also, the unit body 310 penetrates into the module case 200 to be elongated along the longitudinal direction of the module case 200.

A pipe fastening portion 315 is provided at one end of the unit body 310.

The pipe fastening portion 315 is connected to the fire extinguishing agent supply pipe 70, and is disposed to protrude at the rear of the module case 200, specifically out of the connection hole 205 of the module case 200, when the unit body 310 is mounted to the module case 200.

The injection nozzle 330 is for injecting the fire extinguishing agent toward the battery cells 100 inside the module case 200 (see FIG. 2), and is provided to the unit body 310.

The injection nozzle 330 is provided perpendicular to the unit body 310 and disposed to face the plurality of battery cells 100 inside the module case 200.

At least one injection nozzle 330 or a plurality of injection nozzles 330 are provided. Hereinafter, in this embodiment, it will be described that the injection nozzle 330 is provided in plural.

The plurality of injection nozzles 330 are disposed to be spaced apart from each other by a predetermined distance along the longitudinal direction of the module case 200. Hereinafter, the injection nozzle 330 will be described in more detail.

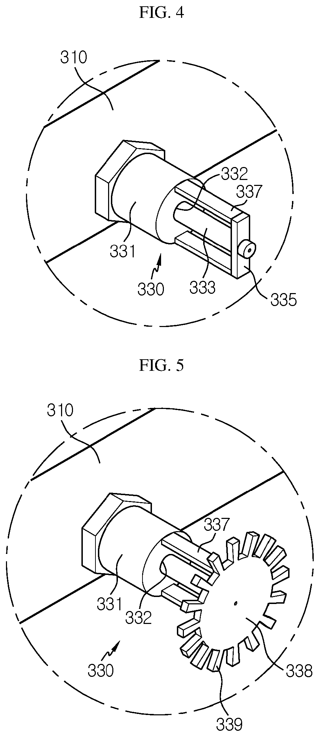

FIG. 4 is a diagram for illustrating an injection nozzle, provided to the fire extinguishing unit of FIG. 3.

Referring to FIG. 4, the injection nozzle 330 includes a nozzle body 331, a glass bulb 333, a nozzle cap 335, and a guide rib 337.

The nozzle body 331 is mounted to the unit body 310 to communicate with the internal flow path of the unit body 310. The nozzle body 331 is disposed to protrude perpendicular to the longitudinal direction of the unit body 310.

The nozzle body 331 has an injection hole 332.

The injection hole 332 is for injecting the fire extinguishing agent, and communicates with the internal flow path of the unit body 310. When the injection hole 332 is opened, the fire extinguishing agent is injected to the outside.

The glass bulb 333 is provided to the nozzle body 331, and is configured to cover the injection hole 332 so that the internal flow path of the unit body 310 is sealed. Also, the glass bulb 333 is configured to be at least partially broken to open the internal flow path and the injection hole 332 when the inside of the module case 200 is exposed to an internal gas over a predetermined temperature.

The glass bulb 333 is filled with a predetermined liquid or gas. Such a predetermined liquid or gas has a property of increasing in volume as the temperature increases. Specifically, the glass bulb 333 is broken, melted or separated from the nozzle body 331 due to volume expansion of the predetermined liquid or gas at the predetermined temperature of 70°C to 100°C to open the injection hole 332.

The nozzle cap 335 is spaced apart from the nozzle body 331 by a predetermined distance, and supports the glass bulb 333 together with the nozzle body 331. By means of the nozzle cap 335, the glass bulb 333 is more stably supported by the nozzle body 331.

The guide rib 337 is provided in plural, and the plurality of guide ribs 337 are connected to the nozzle body 331 and the nozzle cap 335, respectively. The plurality of guide ribs 337 are spaced apart from each other by a predetermined distance, and are also spaced apart from the glass bulb 333 by a predetermined distance.

The guide rib 337 guides the high-temperature gas to be moved toward the glass bulb 333 so that the glass bulb 333 can be more smoothly broken or separated when a high-temperature gas over a predetermined temperature is generated inside the module case 200.

Hereinafter, an injection nozzle according to another embodiment of the present disclosure will be described.

FIG. 5 is a diagram for illustrating an injection nozzle according to another embodiment of the fire extinguishing unit of FIG. 3.

Referring to FIG. 5, the injection nozzle 335 includes a nozzle body 331, a glass bulb 333, a guide rib 337, a nozzle cap 338, and a dispersion portion 339.

The nozzle body 331, the glass bulb 333 and the guide rib 337 are substantially identical or similar to those of the former embodiment and thus will be described in detail later.

The nozzle cap 338 is provided in a shape and size that covers the nozzle body 331. For example, the nozzle cap 338 is provided in a disk shape having an area approximately larger than that of the nozzle body 331.

The dispersion portion 339 is provided to the nozzle cap 338, and is provided in a substantially sawtooth shape along a circumferential direction of the nozzle cap 338. When the fire extinguishing agent is injected through the injection hole 332, the dispersion portion 339 guides the fire extinguishing agent to be dispersed in a broader range.

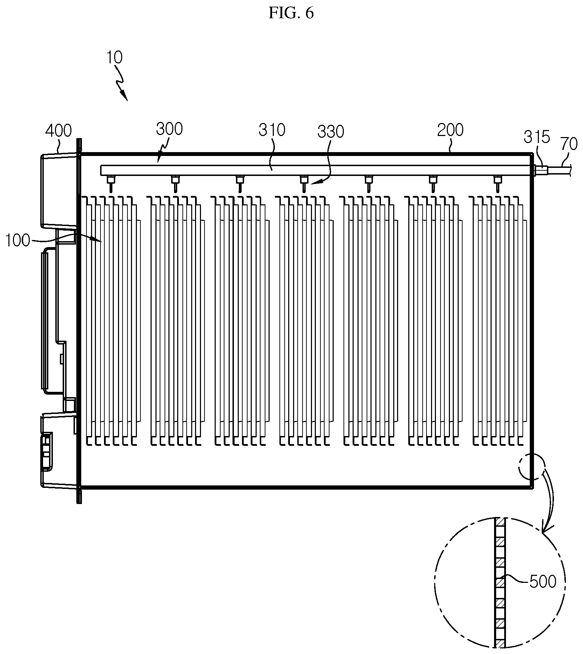

FIG. 6 is a sectional view showing the battery module of FIG. 1.

Referring to FIG. 6, the battery module 10 further includes a cooling air supply unit 400 and a cooling air discharge unit 500.

The cooling air supply unit 400 is provided at the front side of the module case 200, and supplies a cooling air into the module case 200 of the battery module 10 in order to cool the battery cells 100.

The cooling air discharge unit 500 is provided at the rear side of the module case 200, and is disposed diagonally with the cooling air supply unit 400. The cooling air discharge unit 500 discharges the air, which has cooled the battery cells 100 inside the module case 200, to the outside of the module case 200.

Hereinafter, a detailed mechanism of the fire extinguishing unit 300 according to this embodiment when an abnormal situation such as a fire situation of the battery module 10 according to this embodiment occurs will be described in detail.

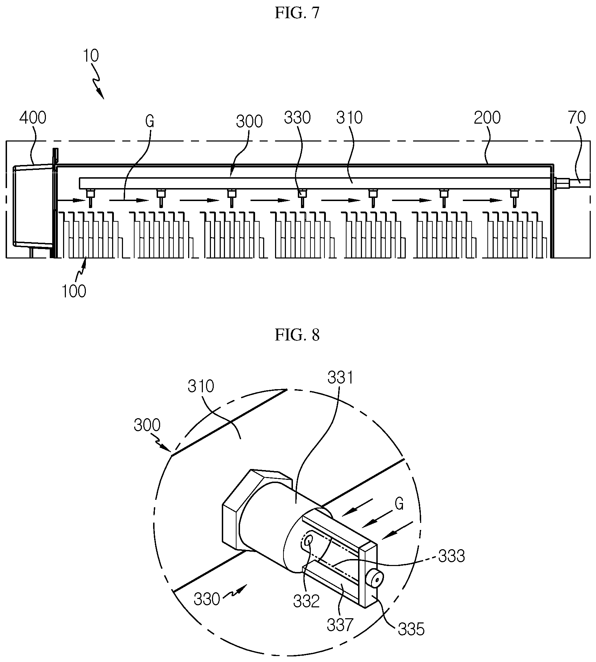

FIGS. 7 to 10 are diagrams for illustrating a fire extinguishing agent injection mechanism inside a module case when fire or thermal runaway occurs in the battery module of FIG. 1.

Referring to FIG. 7, in the battery cells 100 inside the module case 200 of the battery module 10, a fire situation or a thermal runaway situation caused by overheating may occur due to an abnormal situation in at least one battery cell 100. When such a fire situation or thermal runaway situation occurs, a high-temperature gas G may be generated inside the module case 200 due to the overheated battery cell 100.

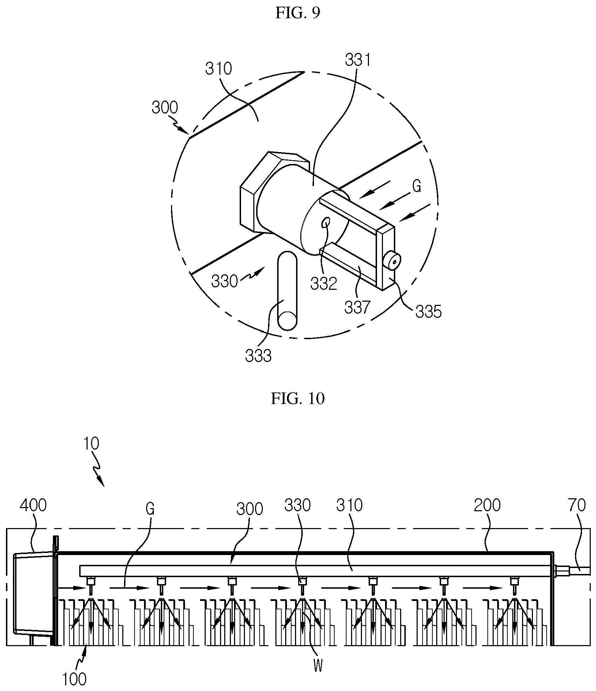

By means of the high-temperature gas G, the glass bulb 333 of the fire extinguishing unit 300 may be broken or melted, as shown in FIG. 8 or, the glass bulb 333 may be separated from the nozzle body 331 as shown in FIG. 9, thereby opening the injection hole 332 through which the fire extinguishing agent is injected.

Referring to FIG. 10, in this embodiment, as the injection hole 332 is opened, the fire extinguishing agent W, namely the water W, inside the fire extinguishing unit 300 is immediately and directly injected toward the battery cells 100.

Accordingly, in this embodiment, when a fire situation or a thermal runaway situation occurs at the battery module 10, since the fire extinguishing agent is immediately and directly injected toward the battery cells 100 inside the module case 200 by means of the fire extinguishing unit 300, it is possible to more quickly and rapidly extinguish the fire or thermal runaway situation at an early stage.

Therefore, in this embodiment, by rapidly extinguishing the fire or thermal runaway situation at an early stage, it is possible to more effectively prevent a dangerous situation such as a secondary explosion from occurring due to the transfer of heat or flame to neighboring battery cells 100 in advance..

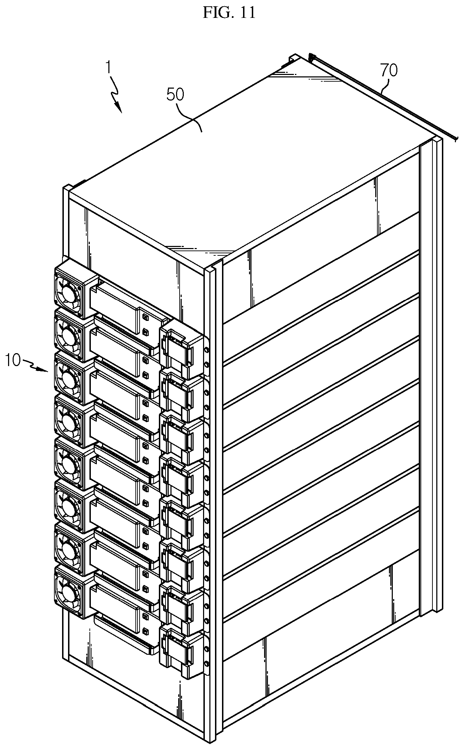

FIG. 11 is a diagram for illustrating a battery rack according to an embodiment of the present disclosure.

Referring to FIG. 11, a battery rack 1 includes the plurality of battery modules 10 of the former embodiment, a rack case 50 for accommodating the plurality of battery modules 10, and a fire extinguishing agent supply pipe 70 connected to the plurality of battery modules 10.

The fire extinguishing agent supply pipe 70 communicates with the fire extinguishing unit 300 and the fire extinguishing tank unit T (see FIG. 12), explained later. Thus, when an abnormal situation such as a fire situation occurs in at least one of the plurality of battery modules 10, the fire extinguishing agent supply pipe 70 guides the fire extinguishing agent of the fire extinguishing tank unit T to be supplied toward the battery module 10 where the abnormal situation occurs.

Since the battery rack 1 of this embodiment includes the battery module 10 of the former embodiment, the battery rack 1 has all advantages of the battery module 10 of the former embodiment.

FIG. 12 is a diagram for illustrating an energy storage system according to an embodiment of the present disclosure.

Referring to FIG. 12, an energy storage system E is used for home or industries as an energy source. The energy storage system E includes at least one battery rack 1 of the former embodiment, or a plurality of battery racks 1 in this embodiment, and a rack container C for accommodating the plurality of battery racks 1.

The rack container C includes a fire extinguishing tank unit T for supplying a fire extinguishing agent to the plurality of battery racks 1. The fire extinguishing tank unit T is filled with the fire extinguishing agent, namely a fire extinguishing water prepared as water. The fire extinguishing tank unit T is connected to the plurality of battery racks 1 through the fire extinguishing agent supply pipe 70 to supply the fire extinguishing water toward the plurality of battery racks 1.

Since the energy storage system E of this embodiment includes the battery rack 1 of the former embodiment, the energy storage system E has all advantages of the battery rack 1 of the former embodiment.

According to various embodiments as above, it is possible to provide a battery module 10 capable of more rapidly extinguishing thermal runaway or fire at an early stage when thermal runaway occurs in the battery module 10 or fire occurs due to the thermal runaway or the like, a battery rack 1 including the battery module 10, and an energy storage system E including the battery rack 1.

While the embodiments of the present disclosure have been shown and described, it should be understood that the present invention is not limited to the specific embodiments described, and that various changes and modifications can be made within the scope of the present invention as defined in the appended claims by those skilled in the art.

## Claims

1. A battery module (10), comprising:
at least one battery cell (100);
a module case (200) configured to accommodate the at least one battery cell (100); and
a fire extinguishing unit (300) mounted to penetrate into the module case (200) and connected to a fire extinguishing tank unit (T) containing a fire extinguishing agent to directly inject the fire extinguishing agent into the module case (200) when a thermal runaway or fire occurs at the at least one battery cell (100),
wherein the fire extinguishing unit (300) is configured to penetrate into the module case (200) at one end side of the module case (200) to be elongated along a longitudinal direction of the module case (200),
wherein the fire extinguishing unit (300) includes:
a unit body (310) provided in an approximately elongated pipe shape in a predetermined length and having an internal flow path and connected to the fire extinguishing tank unit (T), the unit body (310) being configured to penetrate into the module case (200) to be elongated along the longitudinal direction of the module case (200); and
at least one injection nozzle (330) provided to the unit body (310) to inject the fire extinguishing agent toward the battery cell (100) inside the module case (200), and
wherein the at least one injection nozzle (330) includes:
a nozzle body (331) connected to the unit body (310) and having an injection hole (332) for injecting the fire extinguishing agent,
**characterized by** a glass bulb (333) provided to the nozzle body (331) and configured to cover the injection hole (332) so that the internal flow path of the unit body (310) is sealed, the glass bulb (333) being at least partially broken to open the internal flow path and the injection hole (332) when the inside of the module case (200) is exposed to an internal gas over a predetermined temperature,
wherein the glass bulb (333) is filled with a predetermined liquid or gas having a property of increasing in volume as the temperature increases such that the glass bulb (333) is broken, melted or separated from the nozzle body (331) due to volume expansion of the predetermined liquid or gas at a predetermined temperature of 70°C to 100°C to open the injection hole (332).

2. The battery module (10) according to claim 1,
wherein the fire extinguishing unit (300) is configured to penetrate into the module case (200) at one side of the rear surface of the module case (200).

3. The battery module (10) according to claim 1,
wherein the injection nozzle (330) is provided in plural, and
the plurality of injection nozzles (330) are arranged to be spaced apart from each other by a predetermined distance along the longitudinal direction of the module case (200).

4. The battery module (10) according to claim 1,
wherein the at least one injection nozzle (330) is provided perpendicular to the unit body (310) and disposed to face the at least one battery cell (100).

5. The battery module (10) according to claim 1,
wherein the fire extinguishing agent is a fire extinguishing water that is prepared as water.

6. A battery rack (1), comprising:
at least one battery module (10) as defined in claim 1; and
a rack case (50) configured to accommodate the at least one battery module (10).

7. An energy storage system (E), comprising:
at least one battery rack (1) as defined in claim 6.

## Patentansprüche

1. Batteriemodul (10), umfassend:
wenigstens eine Batteriezelle (100);
ein Modulgehäuse (200), welches dazu eingerichtet ist, die wenigstens eine Batteriezelle (100) aufzunehmen; und
eine Feuerlöscheinheit (300), welche derart montiert ist, dass sie in das Modulgehäuse (200) eindringt, und welche mit einer Feuerlöschbehältereinheit (T) verbunden ist, welche ein Feuerlöschmittel enthält, um das Feuerlöschmittel direkt in das Modulgehäuse (200) einzuspritzen, wenn an der wenigstens einen Batteriezelle (100) ein thermisches Durchgehen oder ein Feuer auftritt,
wobei die Feuerlöscheinheit (300) dazu eingerichtet ist, an einer Endseite des Modulgehäuses (200) derart in das Modulgehäuse (200) einzudringen, dass sie entlang einer longitudinalen Richtung des Modulgehäuses (200) verlängert ist,
wobei die Feuerlöscheinheit (300) umfasst:
einen Einheitskörper (310), welcher in einer vorbestimmten Länge in einer ungefähr länglichen Rohrform bereitgestellt ist und einen internen Strömungspfad aufweist und mit der Feuerlöschbehältereinheit (T) verbunden ist, wobei der Einheitskörper (310) dazu eingerichtet ist, derart in das Modulgehäuse (200) einzudringen, dass er entlang der longitudinalen Richtung des Modulgehäuses (200) verlängert ist; und
wenigstens eine Einspritzdüse (330), welche an dem Einheitskörper (310) bereitgestellt ist, um das Feuerlöschmittel in Richtung der Batteriezelle (100) in das Modulgehäuse (200) einzuspritzen, und
wobei die wenigstens eine Einspritzdüse (330) umfasst:
einen Düsenkörper (331), welcher mit dem Einheitskörper (310) verbunden ist und ein Einspritzloch (332) zum Einspritzen des Feuerlöschmittels aufweist,
**gekennzeichnet durch** einen Glaskolben (333), welcher an dem Düsenkörper (331) bereitgestellt ist und dazu eingerichtet ist, das Einspritzloch (332) derart abzudecken, dass der interne Strömungspfad des Einheitskörpers (310) abgedichtet ist, wobei der Glaskolben (333) wenigstens teilweise gebrochen wird, um den internen Strömungspfad und das Einspritzloch (332) zu öffnen, wenn das Innere des Modulgehäuses (200) einem internen Gas oberhalb einer vorbestimmten Temperatur ausgesetzt ist,
wobei der Glaskolben (333) mit einer vorbestimmten Flüssigkeit oder einem vorbestimmten Gas gefüllt ist, welche/welches eine Eigenschaft aufweist, dass ihr/sein Volumen zunimmt, wenn die Temperatur ansteigt, so dass der Glaskolben (333) aufgrund einer Volumenausdehnung der vorbestimmten Flüssigkeit oder des vorbestimmten Gases bei einer vorbestimmten Temperatur von 70 °C bis 100 °C gebrochen, geschmolzen oder von dem Düsenkörper (331) getrennt wird, um das Einspritzloch (332) zu öffnen.

2. Batteriemodul (10) nach Anspruch 1,
wobei die Feuerlöscheinheit (300) dazu eingerichtet ist, an einer Seite der hinteren Fläche des Modulgehäuses (200) in das Modulgehäuse (200) einzudringen.

3. Batteriemodul (10) nach Anspruch 1,
wobei die Einspritzdüse (330) in einer Mehrzahl bereitgestellt ist und
die Mehrzahl von Einspritzdüsen (330) derart angeordnet ist, dass diese entlang der longitudinalen Richtung des Modulgehäuses (200) mit einem vorbestimmten Abstand voneinander beabstandet sind.

4. Batteriemodul (10) nach Anspruch 1,
wobei die wenigstens eine Einspritzdüse (330) senkrecht zu dem Einheitskörper (310) bereitgestellt ist und derart angeordnet ist, dass sie der wenigstens einen Batteriezelle (100) zugewandt ist.

5. Batteriemodul (10) nach Anspruch 1,
wobei das Feuerlöschmittel ein als Wasser aufbereitetes Feuerlöschwasser ist.

6. Batteriegestell (1), umfassend:
wenigstens ein wie in Anspruch 1 definiertes Batteriemodul (10); und
ein Gestellgehäuse (50), welches dazu eingerichtet ist, das wenigstens eine Batteriemodul (10) aufzunehmen.

7. Energiespeichersystem (E), umfassend:
wenigstens ein wie in Anspruch 6 definiertes Batteriegestell (1).

## Revendications

1. Module de batterie (10), comprenant :
au moins une cellule de batterie (100) ;
un boîtier de module (200) configuré pour accueillir l'au moins une cellule de batterie (100) ; et
une unité d'extinction d'incendie (300) montée pour pénétrer dans le boîtier de module (200) et reliée à une unité de réservoir d'extinction d'incendie (T) contenant un agent d'extinction d'incendie pour injecter directement l'agent d'extinction d'incendie dans le boîtier de module (200) lorsqu'un emballement thermique ou un incendie se produit au niveau de l'au moins une cellule de batterie (100),
dans lequel l'unité d'extinction d'incendie (300) est configurée pour pénétrer dans le boîtier de module (200) sur un côté d'extrémité du boîtier de module (200) pour être allongée le long d'une direction longitudinale du boîtier de module (200),
dans lequel l'unité d'extinction d'incendie (300) comporte :
un corps d'unité (310) fourni en une forme de tuyau approximativement allongé sur une longueur prédéterminée et ayant un trajet d'écoulement interne et relié à l'unité de réservoir d'extinction d'incendie (T), le corps d'unité (310) étant configuré pour pénétrer dans le boîtier de module (200) pour être allongé le long de la direction longitudinale du boîtier de module (200) ; et
au moins une buse d'injection (330) disposée sur le corps d'unité (310) pour injecter l'agent d'extinction d'incendie vers la cellule de batterie (100) à l'intérieur du boîtier de module (200), et
dans lequel l'au moins une buse d'injection (330) comporte :
un corps de buse (331) relié au corps d'unité (310) et présentant un trou d'injection (332) pour injecter l'agent d'extinction d'incendie,
**caractérisé par** une ampoule en verre (333) disposée sur le corps de buse (331) et configurée pour recouvrir le trou d'injection (332) de sorte que le trajet d'écoulement interne du corps d'unité (310) soit scellé, l'ampoule en verre (333) étant au moins partiellement brisée pour ouvrir le trajet d'écoulement interne et le trou d'injection (332) lorsque l'intérieur du boîtier de module (200) est exposé à un gaz interne à une température prédéterminée,
dans lequel l'ampoule en verre (333) est remplie d'un liquide ou d'un gaz prédéterminé ayant une propriété d'augmentation de volume à mesure que la température augmente de sorte que l'ampoule en verre (333) soit brisée, fondue ou séparée du corps de buse (331) en raison de l'expansion volumique du liquide ou du gaz prédéterminé à une température prédéterminée de 70 °C à 100 °C pour ouvrir le trou d'injection (332).

2. Module de batterie (10) selon la revendication 1,
dans lequel l'unité d'extinction d'incendie (300) est configurée pour pénétrer dans le boîtier de module (200) sur un côté de la surface arrière du boîtier de module (200).

3. Module de batterie (10) selon la revendication 1,
dans lequel la buse d'injection (330) est fournie en plusieurs exemplaires, et
la pluralité de buses d'injection (330) sont agencées pour être espacées les unes des autres d'une distance prédéterminée le long de la direction longitudinale du boîtier de module (200).

4. Module de batterie (10) selon la revendication 1,
dans lequel l'au moins une buse d'injection (330) est disposée perpendiculairement au corps d'unité (310) et disposée pour faire face à l'au moins une cellule de batterie (100).

5. Module de batterie (10) selon la revendication 1,
dans lequel l'agent d'extinction d'incendie est une eau d'extinction d'incendie qui est préparée sous forme d'eau.

6. Baie de batterie (1), comprenant :
au moins un module de batterie (10) tel que défini dans la revendication 1 ; et
un boîtier de baie (50) configuré pour contenir l'au moins un module de batterie (10).

7. Système de stockage d'énergie (E), comprenant :
au moins une baie de batterie (1) telle que définie dans la revendication 6.
